# FASCICULE DE BREVET EUROPEEN

(11) **EP 0 502 587 B1**
(45) Date de publication et mention de la délivrance du brevet: **05.07.1995**
(21) Numéro de dépôt: 92201154.9
(22) Date de dépôt: 17.08.1989
(51) Int. Cl.: B60J 10/04

(54) **Profil d'étanchéité de glace mobile, notamment de glace ou vitre d'automobile**
Dichtungprofilleiste für verstellbare Scheibe, insbesondere für Kraftfahrzeugfensterscheibe
Sealing profile for movable glazing, especially for motor vehicle window

(30) Priorité: 25.08.1988 FR 8811223
(43) Date de publication de la demande: 09.09.1992
(62) Demande divisionnaire de: 89402296.1
(73) Titulaire: HUTCHINSON, F-75008 Paris (FR)
(72) Inventeur: Guillon, Henri, F-78740 Vaux-sur-Seine (FR); Malnoult, Hervé, F-28110 Luce (FR)
(74) Mandataire: Orès, Bernard

(56) Documents cités:
- FR-A- 2 543 074
- FR-A- 2 555 698
- GB-A- 2 109 042
- PATENT ABSTRACTS OF JAPAN vol. 9, no. 213 (M-408)(1936) 30 Août 1985 & JP-A-60 071 324 (KINUGAWA) 23 April 1985

## Description

L'invention a pour objet un profil d'étanchéité de glace mobile, notamment de véhicule automobile.

On connaît déjà, dans de nombreuses réalisations, des joints d'étanchéité pour vitre ou glace d'automobile, montés fixes sur le cadre ou châssis de la porte du véhicule qu'ils équipent et désignés sous le nom de "coulisses de glace" lorsqu'ils forment l'encadrement supérieur et latéral de la baie propre à être ouverte ou fermée par ladite glace mobile, tandis qu'ils sont désignés sous le nom de "profits d'étanchéité de bas de glace" ou de "lécheurs" lorsqu'ils sont prévus sur le bord inférieur de ladite baie. Si les lécheurs, de même que les coulisses, sont destinés à procurer l'étanchéité requise à l'eau et à l'air d'une part, ils n'en ont pas moins des fonctions différentes. Ainsi, alors que les coulisses ont aussi un rôle de guidage et de protection, celui-ci n'est pas requis des lécheurs dont on attend par contre qu'ils contribuent à l'aspect esthétique du véhicule, tout en formant une saillie aussi faible que possible par rapport à la baie de la porte.

Les solutions apportées à ces problèmes dans l'art antérieur ont abouti à la mise sur le marché de joints d'étanchéité comprenant essentiellement une ou deux lèvre(s) d'étanchéité en caoutchouc naturel ou synthétique, portée(s) par un talon ou un cadre généralement en U, suivant qu'ils sont destinés à des lécheurs ou à des coulisses, la ou les lèvre(s) s'appliquant en se déformant contre la surface mobile.

Toutefois, comme l'application d'une telle lèvre contre la glace a tendance à freiner le coulissement de celle-ci, il a été proposé de recouvrir la surface de la lèvre qui est en contact avec la vitre d'une couche possédant de bonnes propriétés de glissement.

A cet effet, les lèvres d'étanchéité de certains lécheurs et de certaines coulisses ont été revêtues d'une couche réalisée par flocage de fibres ou poils textiles formant un revêtement quelque peu analogue a un velours et, si les propriétés de glissement en sont améliorées, les lèvres ainsi traitées perdent cependant assez rapidement leurs qualités en raison, notamment, de leur usure relativement rapide. Ces lèvres ont donc été remplacées par des lèvres revêtues d'un "glissant" présentant une surface continue en polyoléfine, polytétrafluoroéthylène ou autre matériau, généralement en matière synthétique, résistant bien à l'usure par frottement et assurant une bonne étanchéité à l'eau et à l'air tout en ayant de bonnes propriétés de glissement. Cette solution n'est cependant pas entièrement satisfaisante car elle accentue les risques de rayures des vitres par de la poussière, rayures qui sont à la fois inesthétiques et fragilisantes.

On connait, par le document FR-A-2 543 074, une coulisse de glace pour véhicule automobile, dont le corps comprend des moyens de pincement de bord de carosserie et des moyens de support d'une glissière en U de matière plastique à faible coéfficient de frottement dans laquelle sont engagés des patins de guidage solidaires de la glace, le corps de la coulisse comprenant également une lèvre de caoutchouc souple et déformable pourvue d'un revêtement du type textile sur sa surface appliquée sur la glace. Cette coulisse connue a pour inconvénient que les déplacements des patins dans la glissière peuvent provoquer des déformations du corps qui sont transmises à la lèvre et sont susceptibles d'affecter la qualité de l'étanchéité apportée par la lèvre.

C'est notamment un but de l'invention d'éviter cet inconvénient.

C'est également un but de l'invention de fournir une coulisse qui améliore et facilite le guidage des patins d'une glace mobile et éventuellement la mise en place de la glace dans la coulisse.

L'invention propose à cet effet un profil d'étanchéité pour glace mobile, destiné à être utilisé en tant que coulisse et comprenant des moyens d'accrochage sur un châssis de porte, une lèvre d'étanchéité dont la surface destinée à venir en contact avec la glace comporte un revêtement souple réalisé par flocage de fibres ou de poils textiles, et un corps dans lequel est formé une gorge de réception d'un patin solidaire de la glace, cette gorge étant délimitée par une base et deux flancs dont certaines surfaces comportent un second revêtement plus dur à surface homogène et à bonnes propriétés de glissement(Profil du type divulgué par FR-A-2 543 074), caractérisé en ce que toutes les surfaces de la gorge qui coopèrent au guidage du patin comportent ledit second revêtement et en ce que le corps du profil comprenant ladite gorge est raccordé à la lèvre d'étanchéité par une zone de matière plus élastiquement déformable que ladite lèvre.

Le glissant qui constitue le revêtement des parties de la coulisse destinée à assurer le guidage de la glace est avantageusement rapporté sur ces parties lors de la fabrication du dispositif par coextrusion d'élastomères et/ou de plastomères, comme du caoutchouc ou PVC, ou d'un matériau thermoplascique.

En variante, cette couche de glissant est réalisée par trempage ou pulvérisation, le cas échéant avec masques ou prétraitement des zones ne devant pas être recouvertes.

D'autres caractéristiques et avantages de l'invention apparaîtront de la description qui suit, faite à titre d'exemple et en référence au dessin annexé dans lequel :
- la figure 1 est une vue partielle illustrant une partie de carrosserie d'automobile ;
- la figure 2 est une vue en coupe transversale d'un profit selon l'invention réalisé en tant que coulisse.

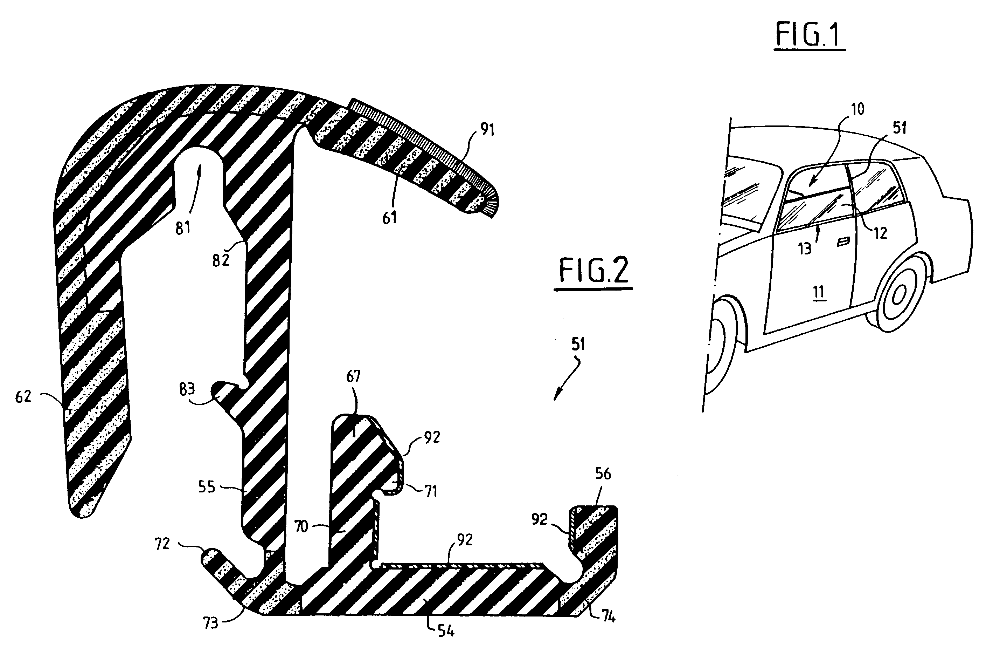

On se réfère d'abord à la figure 1 qui montre un lécheur 13 prévu à la partie inférieure de la baie 10 d'une porte 11 d'automobile, propre à être fermée par une vitre ou glace coulissante 12, ladite vitre ou glace étant guidée latéralement par des coulisses de glace 51 et étant propre à coopérer avec une coulisse supérieure non représentée, s'étendant sensiblement parallèlement au lécheur 13.

Comme montré sur la figure 2, une coulisse de glace 51 selon l'invention comprend une base 54, un flanc 55 sensiblement perpendiculaire à la base 54 lorsque la coulisse est montée dans son châssis (non représenté), un court flanc ou montant 56, et une lèvre d'étanchéité 61 reliée à l'extrémité du flanc 55 distante de la base. Cette coulisse, destinée à assurer le guidage d'une glace munie d'un patin de guidage, non représenté, comporte une nervure 67 ménagée à l'extrémité d'un montant 70 érigé sur la base 54 et sensiblement parallèle au flanc 55 dans la condition de montage de la coulisse et réalisé dans le même matériau que la nervure. Ce montant limite, avec le bec 71 de la nervure 67, une gorge de section droite sensiblement en forme de Γ qui reçoit le patin de guidage. La coulisse comporte encore des moyens d'accrochage sur le châssis d'une porte qu'elle est destinée à équiper, comme une nervure 72 et une lèvre 62 en prolongation de la lèvre 61 ainsi qu'une gorge 81 et une saillie 83. Le montant 56 relié à la base 54 par la partie de liaison 74 participe aussi à l'accrochage de la coulisse dans le châssis.

La lèvre d'étanchéité 61 est munie sur sa partie supérieure dans le cas d'une lèvre dont la concavité est orientée comme illustré sur la figure 2, d'une couche 91 de fibres ou poils textiles formant un revêtement analogue à un velours, réalisé par flocage, tandis que, suivant l'invention, la surface de la base 54 distante du châssis, les surfaces en vis-à-vis du montant 70 et du flanc 56 de même que la surface de la nervure 67 et, plus généralement, toutes les parties destinées à venir en contact avec le patin pour le guider ainsi, et/ou venant éventuellement en contact avec la glace lors de sa mise en place dans la coulisse sont munies d'un revêtement 92 présentant une surface homogène du type polyoléfine, PTFE ou autre matériau, généralement en matière plastique résistant bien à l'usure par frottement et présentant une bonne étanchéité à l'eau et à l'air.

La coulisse décrite à titre d'exemple non limitatif ne comporte qu'une lèvre 61 profilée de manière à présenter une concavité orientée vers sa base mais l'invention n'est évidemment pas limitée à de telles coulisses et s'applique à toute coulisse destinée à coopérer avec un patin de guidage d'une glace ou vitre d'automobile.

## Revendications

1. Profil d'étanchéité pour glace mobile, destiné à être utilisé en tant que coulisse et comprenant des moyens (81) d'accrochage sur un châssis de porte, une lèvre d'étanchéité (61) dont la surface destinée à venir en contact avec la glace comporte un revêtement souple (91) réalisé par flocage de fibres ou de poils textiles, et un corps (54, 56, 70) dans lequel est formée une gorge de réception d'un patin solidaire de la glace, cette gorge étant délimitée par une base (54) et deux flancs (56, 70) dont certaines surfaces comportent un second revêtement (92) plus dur à surface homogène et à bonnes propriétés de glissement, caractérisé en ce que toutes les surfaces (54, 56, 67, 70) de la gorge qui coopèrent au guidage du patin comportent ledit second revêtement (92) et en ce que le corps (54, 70) du profil comprenant ladite gorge est raccordé à la lèvre d'étanchéité (61) par une zone (73) de matière plus élastiquement déformable que la lèvre.

2. Profil d'étanchéité selon la revendication 1, caractérisé en ce que le second revêtement (92) est en polytétrafluoroéthylène, en polyoléfine ou en un matériau analogue.

3. Profil d'étanchéité selon l'une quelconque des revendications précédentes, caractérisé en ce que ledit second revêtement (92) est réalisé par trempage ou pulvérisation avec masque ou pré-traitement des zones ne devant pas être recouvertes.

4. Profil d'étanchéité selon la revendication 1 ou 2, caractérisé en ce que ledit second revêtement (92) est formé par coextrusion avec les parties de la gorge qui coopèrent au guidage du patin.

5. Profil d'étanchéité selon l'une quelconque des revendications précédentes, caractérisé en ce que la lèvre (61) et le corps sont réalisés en des matériaux de dureté et d'élasticité différentes, la lèvre (61) étant plus déformable que le corps.

6. Profil d'étanchéité selon l'une quelconque des revendications précédentes, caractérisé en ce que les parties (54, 56, 70, 67) de la gorge recouvertes du second revêtement plus dur (92) comprennent une nervure (67) ménagée à l'extrémité d'un montant (70) érigé sur la base (54) du profil, ledit montant limitant, avec un bec (71) de ladite nervure (67), une section droite sensiblement en forme de Γ pour la réception du patin de guidage, lequel est en outre propre à coopérer avec un court flanc ou montant (56) dirigé sensiblement parallèlement au montant (70).

## Claims

1. A profiled seal for movable glazing, intended for use as a slide and comprising means (81) for attachment to a door frame, a sealing lip (61) of which the surface intended to come in contact with the glass comprises a flexible covering (91) produced by the flocking of fibres or textile pile, and a body (54, 56, 70) in which is formed a groove for receiving a slider attached to the glass, this groove being defined by a base (54) and two sides (56, 70) of which some surface areas comprise a second harder covering (92) having an homogeneous surface and good sliding properties, characterised in that all the surfaces (54, 56, 67, 70) of the groove which cooperate in guiding the slider comprise the said second covering (92) and in that the body (54, 70) of the profiled seal comprising the said groove is connected to the sealing lip (61) by a zone (73) of a material which is more elastically deformable than the lip.

2. A profiled seal according to claim 1, characterised in that the second covering (92) is of polytetrafluoroethylene, polyolefine or a similar material.

3. A profiled seal according to any one of the preceding claims, characterised in that the said second covering (92) is produced by dipping or spraying with a mask or pretreatment of those zones which do not have to be covered.

4. A profiled seal according to claim 1 or 2, characterised in that the said second covering (92) is formed by coextrusion together with the parts of the groove which cooperate in guiding the slider.

5. A profiled seal according to any one of the preceding claims, characterised in that the lip (61) and the body are produced from materials of different hardness and elasticity, the lip (61) being more deformable than the body.

6. A profiled seal according to any one of the preceding claims, characterised in that the parts (54, 56, 70, 67) of the groove which are covered with the second harder covering (92) comprise a rib (67) disposed at the end of a rising member (71) erected on the base (54) of the profiled seal, the said rising member bounding, with a projection (71) on the said rib (67), a substantially Γ - shaped cross-section adapted to receive the guiding slider which is furthermore adapted to cooperate with a short side or rising member (56) which is directed substantially parallel with the rising member (70).

## Patentansprüche

1. Dichtungsprofil für eine bewegliche Scheibe, das dazu bestimmt ist, als Gleitführung verwendet zu werden, und mit Mitteln (81) zur Anbringung an einem Türrahmen, einer Dichtungslippe (61), deren Oberfläche, die dazu bestimmt ist, in Berührung mit der Scheibe zu gelangen, eine weiche Verkleidung (91) aufweist, die durch Aufflocken von Textilfasern oder -Haaren gebildet ist, sowie einem Rumpf (54, 56, 70), in dem eine Rille zur Aufnahme einer Gleitkufe ausgebildet ist, die fest mit der Scheibe verbunden ist, wobei diese Rille von einem Boden (54) und zwei Seiten (56, 70) begrenzt ist, von denen bestimmte Oberflächen eine zweite, härtere Verkleidung (92) mit einer homogenen Oberfläche und guten Gleiteigenschaften aufweisen, dadurch gekennzeichnet, daß alle die Oberflächen (54, 56, 67, 70) der Rille, die zur Führung der Gleitkufe zusammenwirken, die genannte zweite Verkleidung (92) aufweisen, und daß der Rumpf (54, 70) des Profils, der die genannte Rille aufweist, mit der Dichtlippe (61) durch eine Zone (73) aus einem Material verbunden ist, das elastischer verformbar ist als die Lippe.

2. Dichtungsprofil nach Anspruch 1, dadurch gekennzeichnet, daß die zweite Verkleidung (92) aus Polytetrafluorethylen, aus Polyolefin oder aus einem analogen Material besteht.

3. Dichtungsprofil nach irgendeinem der vorangehenden Ansprüche, dadurch gekennzeichnet, daß die genannte zweite Verkleidung (92) durch Tauchen oder Aufsprühen mit einer Maske oder Vorbehandeln der Zonen ausgeführt wird, die nicht verkleidet werden dürfen.

4. Dichtungsprofil nach Anspruch 1 oder 2, dadurch gekennzeichnet, daß die genannte zweite Verkleidung (92) durch Koextrusion mit Abschnitten der Rille ausgebildet ist, die bei der Führung der Gleitkufe zusammenwirken.

5. Dichtungsprofil nach irgendeinem der vorangehenden Ansprüche, dadurch gekennzeichnet, daß die Lippe (61) und der Rumpf aus einem Material mit unterschiedlicher Härte und Elastizität ausgebildet sind, wobei die Lippe (61) verformbarer ist als der Rumpf.

6. Dichtungsprofil nach irgendeinem der vorangehenden Ansprüche, dadurch gekennzeichnet, daß die Abschnitte (54, 56, 70, 67) der Rille, die mit der zweiten, härteren Verkleidung (92) verkleidet sind, eine Rippe (67) aufweisen, die am Ende eines aufsteigenden Schenkels (70) ausgebildet ist, der über dem Boden des (54) Profils aufrecht angeordnet ist, wobei der genannte aufsteigende Schenkel zusammen mit einer Nase (71) der genanten Rippe (67) einen im wesentlichen Γ-förmigen Querschnitt zur Aufnahme der Führungs-Gleitkufe aufweist, die außerdem dazu eingerichtet ist, mit einem kurzen Flansch oder aufsteigenden Schenkel (56) zusammenzuwirken, der im wesentlichen parallel zum aufsteigenden Schenkel (70) ausgebildet ist.
